# EUROPÄISCHE PATENTSCHRIFT

(11) **EP 1 723 840 B1**
(45) Veröffentlichungstag und Bekanntmachung des Hinweises auf die Patenterteilung: **20.02.2008**
(21) Anmeldenummer: 05450191.1
(22) Anmeldetag: 24.11.2005
(51) Int. Cl.: A01B 35/22

(54) **Grubberzinken sowie Flügelschar hierfür**
Cultivator and winged plough share therefor
Cultivateur et pointe de soc à ailes associé

(30) Priorität: 17.05.2005 AT 8422005
(43) Veröffentlichungstag der Anmeldung: 22.11.2006
(73) Patentinhaber: Vogel & Noot Landmaschinen GmbH & Co KG, 8661 Wartberg (AT)
(72) Erfinder: Jambor, Helmut, 8661 Wartberg i.M. (AT)
(74) Vertreter: Atzwanger, Richard

(56) Entgegenhaltungen:
- FR-A- 1 304 304
- US-A- 2 258 932
- US-A- 3 220 489
- US-A- 4 799 555
- US-B1- 6 814 151

## Beschreibung

Die gegenständliche Erfindung betrifft einen Grubberzinken mit einem Grubberstiel, welcher mit einer lösbar befestigten Flügelschar versehen ist, wobei der Grubberstiel und die Flügelschar mit einander zugeordneten Kupplungselementen ausgebildet sind und weiters am Grubberstiel ein federbelastetes Stellelement vorgesehen ist, durch welches die mit dem Grubberstiel gekuppelte Flügelschar in ihrer gekuppelten Stellung verrastbar ist.
Weiters betrifft die gegenständliche Erfindung eine Flügelschar für einen erfindungsgemäßen Grubberzinken.

Bekannte als Bodenbearbeitungsgeräte dienende Bodengrubber bestehen aus einem an ein Schleppfahrzeug angelenkten Traggestell, welches mit mehreren quer zur Fahrtrichtung ausgerichteten Tragbalken für jeweils eine Mehrzahl von Grubberzinken ausgebildet ist. Jeder Grubberzinken besteht aus einem am Tragbalken befestigten und von diesem nach unten abragenden Grubberstiel, an welchem ein Leitblech, eine Flügelschar und gegebenenfalls eine Scharspitze befestigt sind. Um eine vollständige Bearbeitung des Bodens zu gewährleisten, sind die an hintereinander angeordneten Tragbalken befestigten Grubberzinken quer zur Bewegungsrichtung des Bodengrubbers gegeneinander versetzt. Ein Bodengrubber mit einer mittleren Größe ist z.B. mit zwei Tragbalken ausgebildet, an welchen 13 Grubberzinken befestigt sind. Bei demgegenüber größeren Bodengrubbern sind z. B. vier Tragbalken mit 26 Grubberzinken vorgesehen.

Da durch den Einsatz von Bodengrubbern die Flügelscharen der Grubberzinken einem sehr großen Verschleiß unterliegen, besteht das Erfordernis, die Flügelscharen an den Grubberzinken lösbar zu befestigen, um hierdurch die Flügelscharen auswechseln zu können. Bei der lösbaren Befestigung der einzelnen Flügelscharen muss jedoch berücksichtigt werden, dass nach einem Einsatz eines Bodengrubbers über nur wenige Tage hindurch sämtliche Flügelscharen ersetzt werden müssen, dass weiters eine große Anzahl von Flügelscharen betroffen ist, dass die Flügelscharen im Betrieb sehr starken Belastungen unterworfen sind, weswegen sie sehr gut befestigt sein müssen, und dass weiters die Grubberzinken durch das Erdreich verschmutzt sind, wodurch eine Entfernung der Flügelscharen, um sie durch neue Flügelscharen zu ersetzen, gleichfalls sehr erschwert wird.

Hierfür ist es bekannt, die Flügelschar am Grubberstiel mittels Schrauben zu befestigen. Eine derartige Befestigung ist jedoch sowohl bei der Lösung der Verschraubung als auch bei der erneuten Herstellung der Verschraubung sehr aufwendig, insbesondere unter Berücksichtigung des Sachverhaltes, dass der Grubberzinken durch dessen Verwendung stark verschmutzt ist.

Aus der EP 1504639 1 ist ein Grubberzinken bekannt, bei welchem die Flügelschar am Grubberstiel mittels eines Schnellwechselsystems befestigt ist.
Eine derartige Befestigung der Flügelschar ist insoferne den Erfordernissen entsprechend, als die Flügelschar ohne Werkzeug vom Grubberstiel lösbar ist. Eine derartige Befestigung ist jedoch deshalb nicht den Erfordernissen entsprechend, da sie mehrere zusätzliche Montageteile, ein Sicherungselement und einen Keil erfordert, welche einerseits manipuliert werden müssen und welche andererseits in Verlust geraten können, wodurch die Auswechslung der Flügelschar erschwert wird.

Aus der DE 10319627 A1 ist weiters ein Grubberzinken bekannt, bei welchem die Scharspitze am Grubberstiel mittels eines Steckbolzens, welchem ein Sicherungsbolzen zugeordnet ist, befestigt ist. Eine derartige Befestigung der Scharspitze ist insofern den Erfordernissen entsprechend, als die Scharspitze ohne Werkzeug vom Grubberstiel lösbar ist. Eine derartige Befestigung ist jedoch deshalb nicht den Erfordernissen entsprechend, da sie mehrere zusätzliche Montageteile erfordert, welche einerseits manipuliert werden müssen und welche andererseits in Verlust geraten können, wodurch die Auswechslung der Scharspitze erschwert wird.

Aus der DE 10013621 A1 ist zudem ein Grubberzinken bekannt, bei welchem die Scharspitze und die Flügelschar am Grubberstiel mittels einander zugeordneten Konusflächen befestigbar sind. Zur Befestigung der Scharspitze bzw. der Flügelschar müssen diese auf die am Grubberstiel befindliche Konusfläche aufgesetzt und mittels eines Schlagwerkzeuges mit dieser durch Reibungsschluss gekuppelt werden.
Da eine derartige Konuskupplung durch die Bewegungsrichtung des Bodengrubbers noch weiter verriegelt wird, bedingt es jedoch einen besonderen Aufwand, diese Kupplung wieder zu lösen, um die Scharspitze bzw. die Flügelschar auswechseln zu können. Weiters ist die Herstellung der am Grubberstiel und an der Scharspitze vorgesehenen, einander zugeordneten Konusflächen sehr aufwendig und daher teuer. Zudem muss auch diese Kupplung durch zusätzlich Bauteile gesichert werden.

Analoge Sachverhalte gelten für den aus der US 5979568 A bekannten Bodengrubber, bei welchem die mit einer Flügelschar ausgebildete Scharspitze mit dem Grubberstiel gleichfalls durch Reibungsschluss gekuppelt ist.

Aus der US-A-3220489 ist weiters ein Grubberzinken bekannt, welcher mit einer durch zwei nebeneinander befindliche Bleche gebildeten Tasche versehen ist, in welche eine von der Flügelschar abragende Leiste einsetzbar ist. Zudem ist am Grubberstiel ein federbelasteter Stellhebel gelagert, welcher mit einem Haken ausgebildet ist, der in einer in der Leiste befindlichen Ausnehmung verrastbar ist, wodurch die in die Tasche eingesetzte Flügelschar in ihrer Arbeitsstellung verrastbar ist. Sobald der Stellhebel entgegen der Wirkung der Rastfeder verschwenkt wird, ist zwar die Flügelschar durch diesen nicht mehr verrastet, sodass sie vom Grubberstiel gelöst werden kann, jedoch bedingt es auch hierbei Schwierigkeiten, die Flügelschar vom Grubberstiel zu entfernen.

Der gegenständlichen Erfindung liegt somit die Aufgabe zugrunde, einen Grubberzinken zu schaffen, bei welchem einerseits die Flügelschar am Grubberstiel den Erfordernissen entsprechend starr befestigbar ist, wobei jedoch hierfür keine zusätzlichen Montageteile erforderlich sind, welche in Verlust geraten können, und bei welchem andererseits die Kupplung in einfacher Weise und ohne Werkzeug lösbar ist, sodass die Flügelschar ohne besonderen Aufwand vom Grubberstiel gelöst und durch eine neue Flügelschar ersetzt werden kann. Diese Aufgaben werden erfindungsgemäß dadurch gelöst, dass die am Grubberstiel und an der Flügelschar vorgesehenen Kupplungselemente durch einander zugeordnete Haken und Ausnehmungen gebildet sind, durch welche die Flügelschar mit dem Grubberstiel kuppelbar ist, und dass die Flügelschar mittels des Stellelementes gegenüber dem Grubberstiel verstellbar, vorzugsweise verschiebbar, ist.
Vorzugsweise ist das Stellelement als Stellhebel ausgebildet. Weiters ist vorzugsweise der Grubberstiel mit zumindest angenähert in Arbeitsrichtung offenen Haken und die Flügelschar mit diesen Haken zugeordneten Ausnehmungen ausgebildet.

Nach einer weiters bevorzugten Ausführungsform ist der Grubberstiel mit einem U-förmigen Tragbügel ausgebildet, dessen beiden Schenkel, welche nach unten abragen, mit angenähert in Arbeitsrichtung offenen Haken ausgebildet sind. Dabei kann das Stellelement an den beiden Schenkeln des U-förmigen Tragbügels gelagert sein, wobei durch dessen Verschwenkung die Flügelschar gegenüber dem Tragbügel verschiebbar ist. Vorzugsweise ist das Stellelement, insbesondere der Schwenkhebel, mit einer Führungsfläche ausgebildet, welche durch ein Verstellen des Stellelementes, insbesondere ein Verschwenken des Schwenkhebels, an das hintere Ende der Flügelschar zur Anlage kommt, worauf die Flügelschar angenähert in Arbeitsrichtung verstellbar ist, wodurch die zwischen der Scharspitze und dem Grubberstiel bestehende Kupplung lösbar ist. Dabei kann das Stellelement, insbesondere der Stellhebel, entgegen der Wirkung einer Rückstellfeder verstellbar, insbesondere verschwenkbar sein.

Weiters ist vorzugsweise das Stellelement, insbesondere der Stellhebel, zwischen zwei am Grubberstiel vorgesehenen Anschlägen verstellbar, insbesondere verschwenkbar, wobei das Stellelement, insbesondere der Stellhebel, und die Flügelschar mit einander zugeordneten Rastelementen, insbesondere mit mindestens einem Rasthaken und einer diesen zugeordneten Rastöffnung, ausgebildet sind, wodurch die Flügelschar mittels des Stellhebels in ihrer Arbeitslage verrastbar ist.
Da sich das Stellelement, insbesondere der Stellhebel, in Arbeitsrichtung hinter dem Grubberstiel befindet, ist es gegenüber Einwirkungen, insbesondere Beschädigungen, durch den Einsatz des Bodengrubbers geschützt.

Eine erfindungsgemäße Flügelschar zur Verwendung bei einem erfindungsgemäßen Grubberzinken ist mit mindestens zwei in Arbeitsrichtung voneinander im Abstand befindlichen Rastausnehmungen, welchen am Grubberstiel Rasthaken zugeordnet sind, und weites mit mindestens einer Rastausnehmung, welcher ein am Stellelement befindliches Rastelement, insbesondere ein Rasthaken, zugeordnet ist, ausgebildet.

Der Gegenstand der Erfindung ist nachstehend anhand eines in der Zeichnung dargestellten Ausführungsbeispieles näher erläutert. Es zeigen:
- FIG.1: einen erfindungsgemäßen Grubberzinken, in axonometrischer Darstellung;
- FIG.2: die einzelnen Teile des Grubberzinkens der FIG.1, in auseinandergezogener axonometrischer Darstellung; und
- FIG.3, 3a, 3b, 3c: den Grubberzinken gemäß FIG.1, im Schnitt nach der Ebene III-III der FIG. 1 mit der in drei unterschiedlichen Stellungen befindlichen Scharspitze.

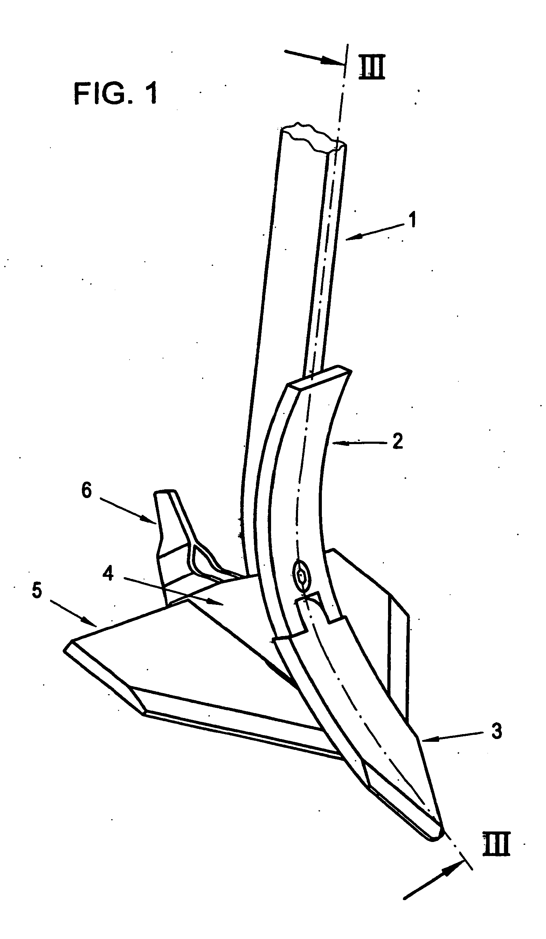

Wie dies aus FIG. 1 ersichtlich ist, weist ein erfindungsgemäßer Grubberzinken einen Grubberstiel 1 auf, dessen oberes Ende am Traggestell des Bodengrubbers starr befestigt ist. Am unteren Ende des Grubberstiels 1 sind an diesem ein Leitblech 2 und eine an dieses anschließende Scharspitze 3 befestigt. Weiters ist am Grubberstiel 1 ein U-förmiger Tragbügel 4 befestigt, an welchem eine nach beiden Seiten des Grubberstiels 1 abragende Flügelschar 5 befestigt ist. Zur Befestigung der Scharspitze 3 und der Flügelschar 5 am Grubberstiel 1 dient ein am Tragbügel 4 verschwenkbar gelagerter Stellhebel 6.

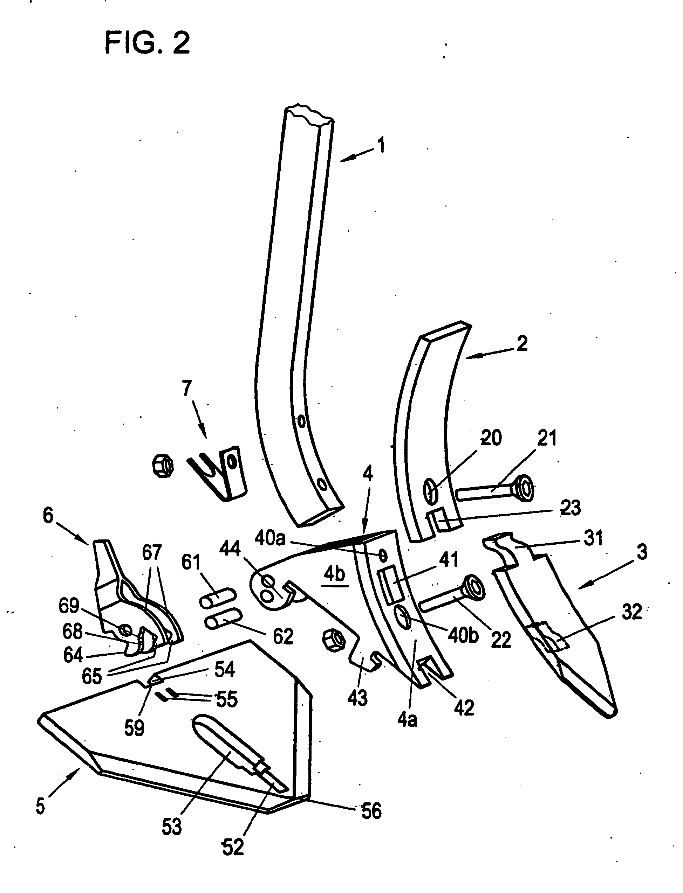

Aus der FIG.2 sind einerseits der Grubberstiel 1, das Leitblech 2, die Scharspitze 3, der U-förmige Tragbügel 4, die Flügelschar 5, der Stellhebel 6 sowie weiters eine Stellfeder 7 und andererseits deren Bestandteile, welche miteinander zusammenwirken, in auseinandergezogener, axonometrischer Darstellung ersichtlich.

Das Leitblech 2 ist am Grubberstiel 1 mittels einer ersten Befestigungschraube 21, welche eine Bohrung 20 des Leitbleches 2 durchsetzt, starr befestigt. Der Tragbügel 4 besteht aus einem mittleren, nachstehend als Tragblech 4a bezeichneten Steg und aus zwei von diesem seitlich abragenden Schenkeln 4b, wobei das Tragblech 4a mit zwei Bohrungen 40a und 40b für die erste Befestigungsschraube 21 und für eine zweite Befestigungsschraube 22 sowie mit zwei zumindest angenähert rechteckigen Ausnehmungen 41 und 42 ausgebildet ist.
Der Tragbügel 4 ist am Grubberstiel 1 mittels der ersten Befestigungsschraube 21, welche die erste Bohrung 40a des Tragbügels 4 durchsetzt, und mittels der zweiten Befestigungsschraube 22, welche die zweite Bohrung 40b des Tragbügels 4 durchsetzt, starr befestigt.

Die Scharspitze 3 ist an ihrem oberen Ende mit einer zum Grubberstiel 1 hin abragenden Kröpfung 31 und im mittleren Bereich ihrer Rückseite mit einem zum Grubberstiel 1 hin abragenden hakenförmigen Vorsprung 32 ausgebildet, welche den im Tragblech 4a des Tragbügels 4 vorgesehenen zwei Ausnehmungen 41 und 42 zugeordnet sind. Der Kröpfung 31 ist weiters eine am unteren Rand des Leitbleches 2 befindliche, zumindest angenähert rechteckige Ausnehmung 23 zugeordnet. Die beiden Schenkel 4b des Tragbügels 4 sind an dem der Scharspitze 3 zugewandten Ende mit zwei vorderen Haken 43 und an dem dem Schwenkhebel 6 zugewandten Ende mit zwei hinteren Haken 44 ausgebildet, welchen in der Flügelschar 5 eine vordere schlitzartige Ausnehmung 53 und an deren hinterer Berandung eine nach hinten offene Ausnehmung 54 zugeordnet sind. Die in der Flügelschar 5 befindliche vordere Ausnehmung 53 ist durch eine gegenüber dieser etwas schmälere, schlitzartige Ausnehmung 52 fortgesetzt, welche dem von der Rückseite der Scharspitze 3 abragenden hakenförmigen Vorsprung 32 zugeordnet ist und welche durch einen vorderen Steg 56 verschlossen ist.

Der Stellhebel 6 ist an einem zwischen den beiden Schenkeln 4b des Tragbügels 4 befindlichen ersten Bolzen 61 verschwenkbar gelagert. Zwischen dem Grubberstiel 1 und dem Stellhebel 6 befindet sich weiters die V-förmige Stellfeder 7, welche an zwei Führungsflächen 67 des Stellhebels 6 zur Anlage kommt. Zudem ist zwischen den beiden Schenkeln 4b ein zweiter Bolzen 62 vorgesehen, welchem am Stellhebel 6 befindliche Anschlagflächen 64 zugeordnet sind, die unter der Wirkung der Stellfeder 7 an den zweiten Bolzen 62 zur Anlage kommen. Zudem ist der Stellhebel 6 mit Rasthaken 65 ausgebildet, welchen in der Flügelschar 5 befindliche Rastöffnungen 55 zugeordnet sind. Schließlich ist der Stellhebel 6 zwischen den Anschlagflächen 64 und den Rasthaken 65 mit Stellflächen 68 ausgebildet, welche in ihrem mittleren Bereich mit einer Ausnehmung 69 ausgebildet sind und welche der Berandung 59 der in der Flügelschar 5 befindlichen hinteren Ausnehmung 54 zugeordnet sind und mit dieser zusammenwirken.

Durch diese Ausbildung des Grubberzinkens wird es ermöglicht, sowohl die Scharspitze 3 als auch die Flügelschar 5 am Gruberstiel 1 einerseits den Erfordernissen des Betriebes entsprechend starr zu befestigen und andererseits die Befestigung der Scharspitze 3 und der Flügelschar 5 in einfacher Weise zu lösen, um diese beiden Bauteile rasch durch neue Bauteile ersetzen zu können.

Dabei sind das Leitblech 2 und der Tragbügel 4 mit dem Grubberstiel 1 durch die Schrauben 21 und 22 starr verbunden und sind die Scharspitze 3 und die Flügelschar 5 mit dem Grubberstiel 1 durch Verrastung gekuppelt, wobei sie vom Grubberstiel 1 durch Verschwenkung des Stellhebels 6 in einfacher Weise lösbar sind. Da sich der Stellhebel 6 in Arbeitsrichtung des Grubberzinkens hinter dem Leitblech 2 und der Scharspitze 3 befindet, ist er gegenüber durch den Betrieb auftretende Einwirkungen, insbesondere gegenüber Beschädigungen, geschützt.

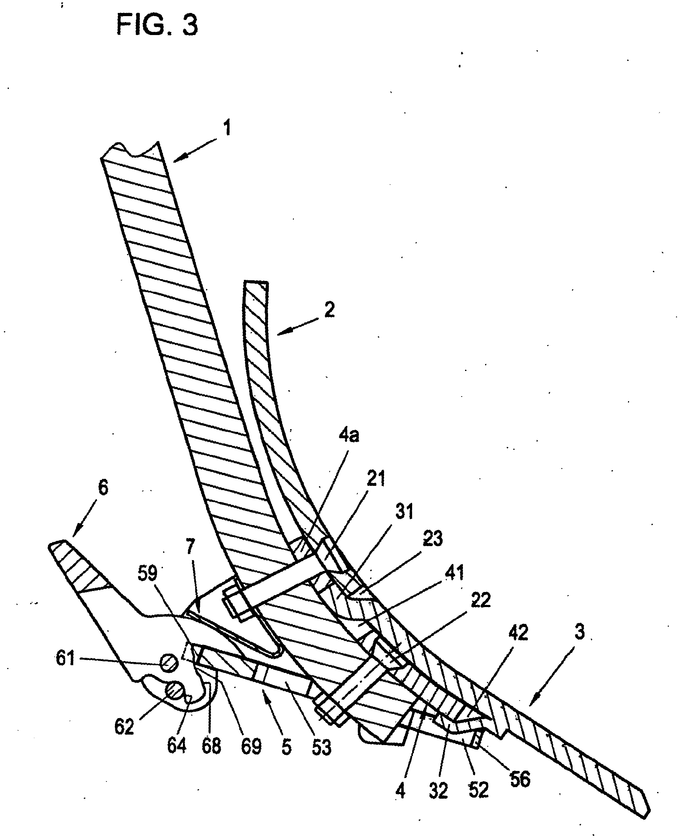

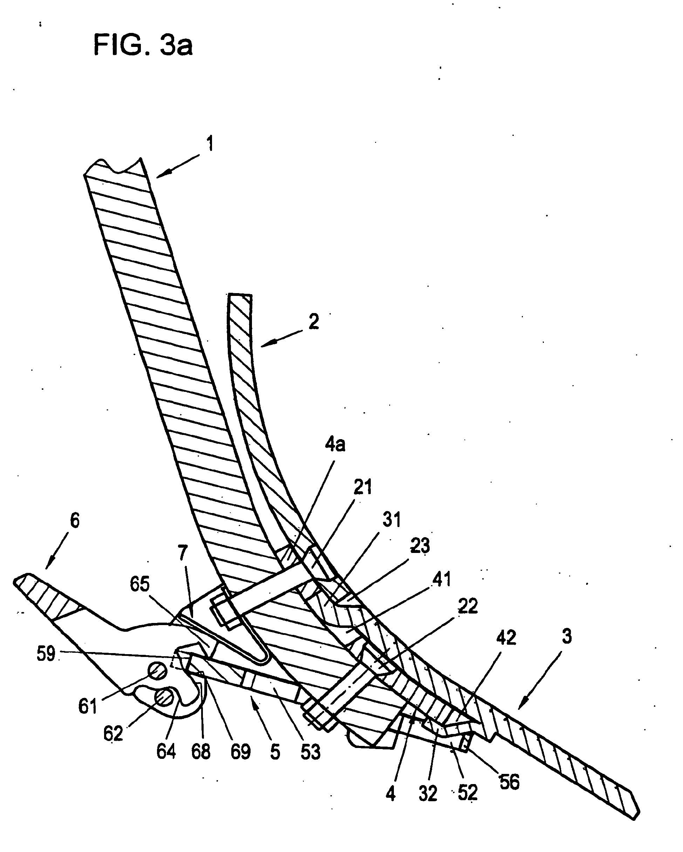

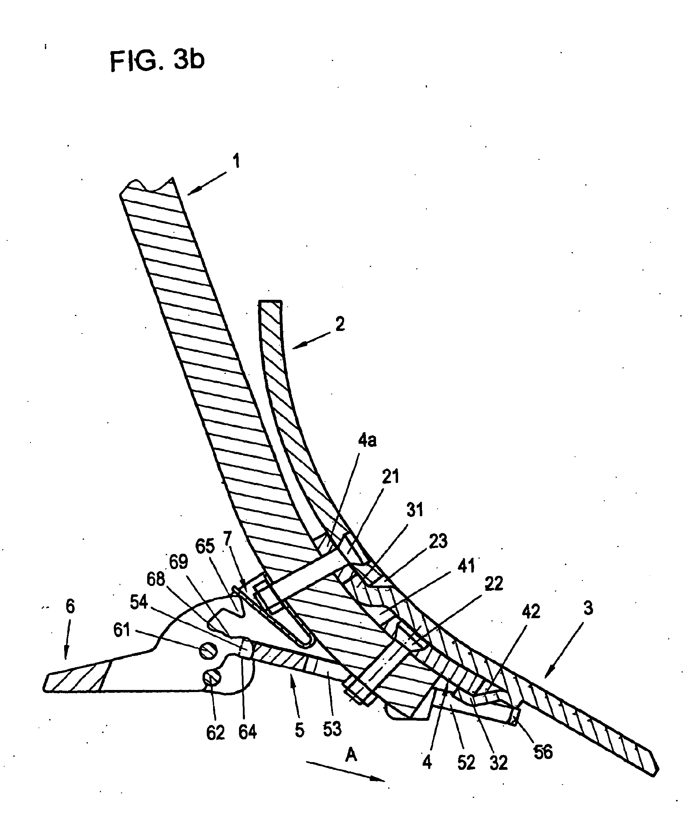

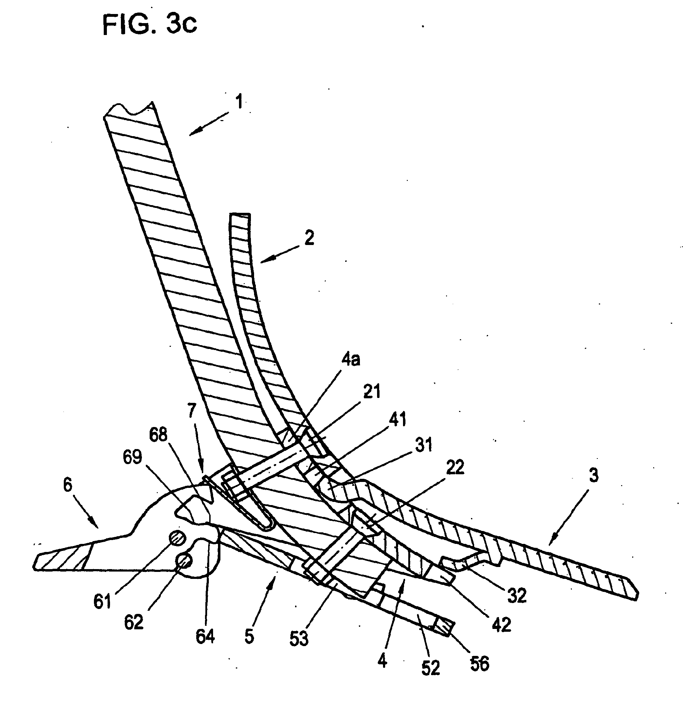

In FIG.3 ist dieser Grubberzinken in der Arbeitslage dargestellt. Dabei ist die Kröpfung 31 der Scharspitze 3 in die obere Ausnehmung 41 des Tragbügels 4 und in die Ausnehmung 23 des Leitbleches 2 eingesetzt, wobei deren freies Ende den unteren Rand des Leitbleches 2 untergreift. Weiters ragt der hakenförmige Vorsprung 32 der Scharspitze 3 in die Ausnehmung 42 des Tragbügels 4 und in den Schlitz 52 der Flügelschar 5 ein, wobei dessen freies Ende den inneren Rand der Ausnehmung 42 untergreift.

In dieser Stellung der Scharspitze 3 ist diese durch die Flügelschar 5, welche mittels des Stellhebels 6 gegenüber dem Grubberstiel 1 verschiebbar ist, verrastet. Der Stellhebel 6 ist durch die Stellfeder 7 in dieser Endstellung gehalten, wobei dessen Anschläge 64 am Bolzen 62 zur Anlage kommen. Die Kupplung des Stellhebels 6 mit der Flügelschar 3 ist dadurch bewirkt, dass die Rasthaken 65 des Stellhebels 6 in die in der Flügelschar 5 befindlichen Rastausnehmungen 55 eingreifen.

Die Flügelschar 5 befindet sich in ihrer hinteren Endstellung, in welcher deren hinterer Rand 59 in die durch die Haken 44 des Tragbügels 4 gebildeten Ausnehmungen einragt, wobei die Haken 44 den Rand der Ausnehmung 54 untergreifen. Weiters befinden sich die vorderen Haken 43 des Tragbügels 4 innerhalb der vorderen Ausnehmung 53 der Flügelschar 5, wobei sie dessen vorderen Rand untergreifen. Zudem befindet sich der hakenförmige Vorsprung 32 in der schlitzartigen Ausnehmung 52 und innerhalb des vorderen Steges 56 der Flügelschar 5.
Die Scharspitze 3 ist dadurch in der Arbeitslage gehalten, dass sich deren Kröpfung 31 in den Ausnehmungen 23 und 41 befindet und das Leitblech 2 untergreift sowie dass sich der hakenförmige Vorsprung 32 in den Ausnehmungen 42 und 52 befindet, wobei das freie Ende den inneren Rand der Ausnehmung 42 untergreift. Da die in die Ausnehmungen 23,41 einragende Kröpfung 31 sowie der in die Ausnehmungen 42 und 52 einragende hakenförmige Vorsprung 32 aneinander mit engen Toleranzen angepasst sind, sind die Scharspitze 3 und die Flügelschar 5 auch gegenüber quer zur Arbeitsrichtung auftretenden Belastungen gesichert.

Wie dies in den FIG.3a bis 3c dargestellt ist, erfolgt die Lösung der Befestigung der Scharspitze 3 und der Flügelschar 5 vom Grubberstiel 1 dadurch, dass der Stellhebel 6 entgegen der Wirkung der Stellfeder 7 im Gegenuhrzeigersinn verschwenkt wird. In einem ersten Schwenkbereich befindet sich die untere Kante der Berandung 59 der Flügelschar 5 in den in den Stellflächen 68 des Stellhebels 6 vorgesehenen Ausnehmungen 69. Durch eine Verschwenkung des Stellhebels 6 werden die Rasthaken 65 aus den Rastöffnungen 55 der Flügelschar 5 heraus verschwenkt. Es wird hiezu auf die FIG. 3a verwiesen. Bei einer weiteren Verschwenkung des Stellhebels 6 gleiten die Führungsflächen 68 des Stellhebels 6 längs der unteren Kante der Berandung 59 der Flügelschar 5, wodurch diese in Richtung des Pfeiles A der FIG.3b verschoben wird. Hierdurch wird die Flügelschar 5 aus den Haken 43 und 44 hinausgeschoben. Es wird hiezu auf FIG.3b verwiesen.

Hierdurch kommt die Flügelschar 5 vom Tragbügel 4 frei und fällt von diesem ab. Ebenso wird auch der von der Rückseite der Scharspitze 3 abragende hakenförmige Vorsprung 32 von der Flügelschar 5 freigegeben, wodurch die Scharspitze 3 im Gegenuhrzeigersinn verschwenkt und die Kröpfung 31 aus den Ausnehmungen 23 und 41 herausgezogen werden kann. Es wird hiezu auf FIG.3c verwiesen.

Sobald der Stellhebel 6 nicht mehr betätigt wird, wird er unter der Wirkung der Stellfeder 7 im Uhrzeigersinn zurück verschwenkt. Hierauf kann eine neue Scharspitze 3 eingesetzt werden. Weiters kann eine neue Flügelschar 5 eingesetzt werden, welche entgegen der Richtung des Pfeiles A so lange verschoben wird, bis die Rasthaken 65 unter Wirkung der Stellfeder 7 in die Rastöffnungen 55 einrasten. Hierbei befindet sich die Flügelschar 5 wieder in ihrer Arbeitslage, in welcher sie mittels der Hakenpaare 43 und 44 am Tragbügel 4 befestigt ist. Da dabei weiters der hakenförmige Vorsprung 32 der Scharspitze 3 in die Ausnehmungen 42 und 52 einragt, ist sie mittels der Flügelschar 5 in ihrer Lage gehalten.

Hierdurch ist eine Befestigung der Flügelschar 5 geschaffen, welche einerseits den Anforderungen des Betriebes entsprechend stabil ist und welche andererseits dadurch in einfacher Weise lösbar ist, dass der Stellhebel 6 entgegen der Wirkung der Stellfeder 7 verschwenkt wird. Zudem sind für die Verrastung der Flügelschar 5 in ihrer Arbeitslage keine zusätzlichen Montageteile erforderlich und kann die Kupplung der Flügelschar 5 mit dem Grubberstiel 1 und deren Lösung vom Grubberstiel 1 ohne zusätzliche Werkzeuge vorgenommen werden. Durch die erfindungsgemäße Kupplung der Flügelschar mit dem Grubberstiel werden somit die dem bekannten Stand der Technik anhaftenden Nachteile vermieden.

## Patentansprüche

1. Grubberzinken mit einem Grubberstiel (1), welcher mit einer lösbar befestigten Flügelschar (5) versehen ist, wobei der Grubberstiel (1) und die Flügelschar (5) mit einander zugeordneten Kupplungselementen (43,44; 53,54) ausgebildet sind und weiters am Grubberstiel (1) ein federbelastetes Stellelement (6) vorgesehen ist, durch welches die mit dem Grubberstiel (1) gekuppelte Flügelschar (5) in ihrer gekuppelten Stellung verrastbar ist, **dadurch gekennzeichnet, dass** die am Grubberstiel (1) und an der Flügelschar (5) vorgesehenen Kupplungselemente durch einander zugeordnete Haken (43, 44) und Ausnehmungen (53, 54) gebildet sind, durch welche die Flügelschar (5) mit dem Grubberstiel (1) kuppelbar ist, und dass die Flügelschar (5) mittels des Stellelementes (6) gegenüber dem Grubberstiel (1) verstellbar, vorzugsweise verschiebbar, ist.

2. Grubberzinken nach Patentanspruch 1, **dadurch gekennzeichnet, dass** das Stellelement als Stellhebel (6) ausgebildet ist.

3. Grubberzinken nach Patentansprüche 1 und 2, **dadurch gekennzeichnet, dass** der Grubberstiel (1) mit zumindest angenähert in Arbeitsrichtung offenen Haken (43, 44) und die Flügelschar (5) mit diesen Haken (43, 44) zugeordneten Ausnehmungen (53, 54) ausgebildet ist.

4. Grubberzinken nach einem der Patentansprüche 1 bis 3, **dadurch gekennzeichnet, dass** der Grubberstiel (1) mit einem U-förmigen Tragbügel (4) ausgebildet ist, dessen beiden Schenkel (4b), welche nach unten abragen, mit angenähert in Arbeitsrichtung offenen Haken (43, 44) ausgebildet sind.

5. Grubberzinken nach Patentanspruch 4, **dadurch gekennzeichnet, dass** das Stellelement (6) an den beiden Schenkeln des U-förmigen Tragbügels (4) gelagert ist, wobei durch dessen Verschwenkung die Flügelschar (5) gegenüber dem Tragbügel (4) verschiebbar ist.

6. Grubberzinken nach Patentanspruch 5, **dadurch gekennzeichnet, dass** das Stellelement, insbesondere der Schwenkhebel (6), mit einer Führungsfläche (68) ausgebildet ist, welche durch ein Verstellen des Stellelementes, insbesondere ein Verschwenken des Schwenkhebels (6), an das hintere Ende der Flügelschar (5) zur Anlage kommt, worauf die Flügelschar (5) angenähert in Arbeitsrichtung verstellbar ist, wodurch die zwischen der Scharspitze (3) und dem Grubberstiel (1) bestehende Kupplung lösbar ist.

7. Grubberzinken nach einem der Patentansprüche 5 und 6, **dadurch gekennzeichnet, dass** das Stellelement, insbesondere der Stellhebel (6), entgegen der Wirkung einer Rückstellfeder (7) verstellbar, insbesondere verschwenkbar ist.

8. Grubberzinken nach einem der Patentansprüche 5 bis 7 **dadurch gekennzeichnet, dass** das Stellelement, insbesondere der Stellhebel (6), zwischen zwei am Grubberstiel (1) vorgesehenen Anschlägen verstellbar, insbesondere verschwenkbar ist.

9. Grubberzinken nach einem der Patentansprüche 5 bis 8, **dadurch gekennzeichnet, dass** das Stellelement, insbesondere der Stellhebel (6), und die Flügelschar (5) mit einander zugeordneten Rastelementen, insbesondere mit mindestens einem Rasthaken (65) und einer diesen zugeordneten Rastöffnung (55), ausgebildet sind, wodurch die Flügelschar (5) mittels des Stellhebels (6) in ihrer Arbeitslage verrastbar ist.

10. Grubberzinken nach einem der Patentansprüche 1 bis 9, **dadurch gekennzeichnet, dass** sich das Stellelement, insbesondere der Stellhebel (6), in Arbeitsrichtung hinter dem Grubberstiel (1) befindet.

11. Flügelschar zur Verwendung bei einem Grubberzinken (1) gemäß den Patentansprüchen 1 bis 10, **dadurch gekennzeichnet, dass** sie mit mindestens zwei in Arbeitsrichtung voneinander im Abstand befindlichen Rastausnehmungen (53, 54), welchen am Grubberstiel (1) Rasthaken (43, 44) zugeordnet sind, und weiters mit mindestens einer Rastausnehmung (55), welcher ein am Stellelement (6) befindliches Rastelement, insbesondere ein Rasthaken (65), zugeordnet ist, ausgebildet ist.

## Claims

1. A cultivator tine having a cultivator shank (1), which is provided with a detachably attached winged share (5), the cultivator shank (1) and the winged share (5) being provided with mutually associated coupling elements (43, 44; 53, 54) and a spring-loaded adjusting element (6) additionally being provided on the cultivator shank (1), by which adjusting element (6) the winged share (5) coupled to the cultivator shank (1) may be locked in its coupled position, **characterised in that** the coupling elements provided on the cultivator shank (1) and on the winged share (5) are formed by mutually associated hooks (43, 44) and openings (53, 54), by which the winged share (5) may be coupled to the cultivator shank (1), and **in that** the winged share (5) is adjustable, preferably displaceable, relative to the cultivator shank (1) by means of the adjusting element (6).

2. A cultivator tine according to claim 1, **characterised in that** the adjusting element takes the form of an adjusting lever (6).

3. A cultivator tine according to claims 1 and 2, **characterised in that** the cultivator shank (1) is provided with hooks (43, 44) open at least approximately in the working direction and the winged share (5) is provided with openings (53, 54) associated with these hooks (43, 44).

4. A cultivator tine according to one of claims 1 to 3, **characterised in that** the cultivator shank (1) is provided with a U-shaped support bracket (4), whose two legs (4b), which project downwards, are provided with hooks (43, 44) open approximately in the working direction.

5. A cultivator tine according to claim 4, **characterised in that** the adjusting element (6) is mounted on the two legs of the U-shaped support bracket (4), swivelling thereof allowing displacement of the winged share (5) relative to the support bracket (4).

6. A cultivator tine according to claim 5, **characterised in that** the adjusting element, in particular the swivel lever (6), is provided with a guide face (68), which comes to rest against the rear end of the winged share (5) through adjustment of the adjusting element, in particular swivelling of the swivel lever (6), whereupon the winged share (5) is adjustable approximately in the working direction, whereby the coupling between the share tip (3) and the cultivator shank (1) may be undone.

7. A cultivator tine according to one of claims 5 and 6, **characterised in that** the adjusting element, in particular the adjusting lever (6), is adjustable, in particular swivellable, against the action of a restoring spring (7).

8. A cultivator tine according to one of claims 5 to 7, **characterised in that** the adjusting element, in particular the adjusting lever (6), is adjustable, in particular swivellable, between two limit stops provided on the cultivator shank (1).

9. A cultivator tine according to one of claims 5 to 8, **characterised in that** the adjusting element, in particular the adjusting lever (6), and the winged share (5) are provided with mutually associated latching elements, in particular with at least one latching hook (65) and one latching orifice (55) associated therewith, whereby the winged share (5) may be latched in its working position by means of the adjusting lever (6).

10. A cultivator tine according to one of claims 1 to 9, **characterised in that** the adjusting element, in particular the adjusting lever (6), is located behind the cultivator shank (1) in the working direction.

11. A winged share for use with a cultivator tine (1) according to claims 1 to 10, **characterised in that** it is provided with at least two latching openings (53, 54) spaced from one another in the working direction, with which openings (53, 54) there are associated latching hooks (43, 44) on the cultivator shank (1), and additionally with at least one latching opening (55), with which is associated a latching element, in particular a latching hook (65) on the adjusting element (6).

## Revendications

1. Dent de cultivateur comportant une tige de cultivateur (1) qui est pourvue d'un soc à ailes (5) fixé de manière amovible, étant précisé que la tige (1) et le soc (5) sont pourvus d'éléments d'accouplement (43, 44 ; 53, 54) associés entre eux et qu'il est prévu sur la tige (1) un élément de commande à ressort (6) grâce auquel le soc (5) accouplé à la tige (1) peut être verrouillé dans sa position accouplée, **caractérisée en ce que** les éléments d'accouplement prévus sur la tige de cultivateur (1) et sur le soc à ailes (5) sont formés par des crochets (43, 44) et des creux (53, 54) associés grâce auxquels le soc (5) est apte à être accouplé à la tige (1), et **en ce que** le soc (5) est apte à être déplacé, de préférence par coulissement, par rapport à la tige (1) grâce à l'élément de commande (6).

2. Dent de cultivateur selon la revendication 1, **caractérisée en ce que** l'élément de commande est conçu comme un levier de commande (6).

3. Dent de cultivateur selon les revendications 1 et 2, **caractérisée en ce que** la tige de cultivateur (1) est pourvue de crochets (43, 44) ouverts au moins approximativement dans le sens de travail et le soc à ailes (5) est pourvu de creux (53, 54) associés à ces crochets (43, 44).

4. Dent de cultivateur selon l'une des revendications 1 à 3, **caractérisée en ce que** la tige de cultivateur (1) est pourvue d'une bride de support en U (4) dont les deux branches (4b) qui dépassent vers le bas sont pourvues de crochets (43, 44) ouverts approximativement dans le sens de travail.

5. Dent de cultivateur selon la revendication 4, **caractérisée en ce que** l'élément de commande (6) est monté sur les deux branches de la bride de support en U (4), le soc à ailes (5) étant apte à coulisser par rapport à ladite bride (4) grâce au pivotement de l'élément de commande (6).

6. Dent de cultivateur selon la revendication 5, **caractérisée en ce que** l'élément de commande, en particulier le levier pivotant (6), est pourvu d'une surface de guidage (68) qui, grâce à un déplacement de l'élément de commande, en particulier à un pivotement du levier pivotant (6), vient s'appliquer contre l'extrémité arrière du soc à ailes (5), après quoi celui-ci peut être déplacé approximativement dans le sens de travail et l'accouplement entre la pointe de soc (3) et la tige de cultivateur (1) peut alors être supprimé.

7. Dent de cultivateur selon l'une des revendications 5 et 6, **caractérisée en ce que** l'élément de commande, en particulier le levier de commande (6), est apte à être déplacé, en particulier à pivoter, à l'encontre de l'action d'un ressort de rappel (7).

8. Dent de cultivateur selon l'une des revendications 5 à 7, **caractérisée en ce que** l'élément de commande, en particulier le levier de commande (6), est apte à être déplacé, en particulier à pivoter, entre deux butées prévues sur la tige de cultivateur (1).

9. Dent de cultivateur selon l'une des revendications 5 à 8, **caractérisée en ce que** l'élément de commande, en particulier le levier de commande (6), et le soc à ailes (5) sont pourvus d'éléments de verrouillage associés entre eux, en particulier d'au moins un crochet de verrouillage (65) et d'une ouverture de verrouillage (55) associée à celui-ci, moyennant quoi le soc à ailes (5) peut être verrouillé dans sa position de travail à l'aide du levier de commande (6).

10. Dent de cultivateur selon l'une des revendications 1 à 9, **caractérisée en ce que** l'élément de commande, en particulier le levier de commande (6), se trouve derrière la tige de cultivateur (1), dans le sens de travail.

11. Soc à ailes à utiliser avec une dent de cultivateur (1) selon les revendications 1 à 10, **caractérisé en ce qu'**il est pourvu d'au moins deux creux de verrouillage (53, 54) qui sont espacés l'un de l'autre dans le sens de travail et auxquels sont associés des crochets de verrouillage (43, 44) sur la tige de cultivateur (1), et d'au moins un creux de verrouillage (55) auquel est associé un élément de verrouillage, en particulier un crochet de verrouillage (65), prévu sur l'élément de commande (6).
